# EUROPEAN PATENT APPLICATION

(11) **EP 2 562 583 A2**
(43) Date of publication of application: **27.02.2013**
(21) Application number: 11772224.9
(22) Date of filing: 20.04.2011
(51) Int. Cl.: G02C 5/22, G02C 5/14, G02C 13/00

(54) **STRUCTURE FOR CONNECTING TEMPLE TO EYEGLASS FRAME**

(30) Priority: 22.04.2010 KR 20100037372
(71) Applicant: Kim, Young Ho, Gyeongsan-si, Gyeongsangbuk-do 712-844 (KR)
(72) Inventor: Kim, Young Ho, Gyeongsan-si, Gyeongsangbuk-do 712-844 (KR)
(74) Representative: Chaillot, Geneviève
(86) International application number: PCT/KR2011/002834
(87) International publication number: WO 2011/132936

(57) **Abstract**

The present invention relates to a temple coupling structure for eyeglasses that provides a frame and temples made of titanium, especially, beta titanium having light weight, high hardness, and high frictional force, while the temples are being foldable. The temple coupling structure for eyeglasses includes: a frame made of a beta titanium plate and having lenses fitted thereinto, temples made of a beta titanium plate, and rotating means located between each temple and the frame in such a manner as to allow each temple to be elastically rotated and foldable.

## Description

### [Technical Field]

The present invention relates to a temple coupling structure for eyeglasses, and more particularly, to a temple coupling structure for eyeglasses that provides a frame and temples made of titanium, especially, beta titanium having light weight, high hardness, and high frictional force, while the temples are being foldable.

### [Background Art]

Generally, eyeglasses include a frame into which lenses are fitted and temples rotatably coupled to the end pieces of the frame, and the frame and temples are made of plastic or metal materials.

Especially, the frame and temples of the eyeglasses are placed on a wearer's nose over a wearer's ears, and therefore, they should be light. To do this, they are generally made of titanium having light weight and high hardness.

Since the eyeglasses are made of very light titanium, thus, the frame into which the lenses are fitted and the temples are formed integrally with each other. Alternatively, hinges are welded fixedly on the ends of the frame and each temple, and hinge pins are screw-coupled to the welded hinges, so that the frame and the temples are rotatable to each other.

That is, the eyeglasses made of titanium have light weight and high hardness, and therefore, they are popularized so as to decrease the weight applied to the wearer's ears and nose at the time when they are worn. In this case, the frame and temples are formed integrally with each other, and alternatively, the hinges are welded fixedly on the ends of the frame and each temple and are coupled to each other by means of the hinge pins, thereby folding the temples.

If the hinges are welded fixedly on the ends of the frame and each temple, however, they may be escaped from the temples and frames due to the erosion or damage of the welded portions after the use of the eyeglasses for a long period of time.

If the temples and the frame are coupled rotatably to each other by means of the hinge pins, further, the screw portions of the hinges and the hinge pins are abraded and loose through the repeated folding or unfolding operations of the temples, which causes the hinge pins to be escaped from the hinges.

That is, the temples are repeatedly folded and unfolded, so that the welded portions are damaged and the screw portions are abraded, thereby reducing the life of the product, causing the quality of product to be deteriorated, and decreasing the reliability of the product.

### [Disclosure]

### [Technical Problem]

Accordingly, the present invention has been made in view of the above-mentioned problems occurring in the prior art, and it is an object of the present invention to provide a temple coupling structure for eyeglasses that does not use hinges fixedly welded to temples and a frame, but uses the temples made of a beta titanium plate having high frictional force in such a manner as to be foldable, so that even though the temples are repeatedly folded or unfolded, abrasion on the temples or frame is not easily generated, and that automatically folds or unfolds the temples at a given angle at the time when they are folded or unfolded, thereby performing gentle folding or unfolding operations.

### [Technical Solution]

To accomplish the above object, according to the present invention, there is provided a temple coupling structure for eyeglasses including: a frame made of a beta titanium plate and having lenses fitted thereinto, temples made of a beta titanium plate, and rotating means located between each temple and the frame in such a manner as to allow each temple to be elastically rotated and foldable.

### [Advantageous Effect]

According to the present invention, the temple coupling structure for eyeglasses that couples the temples and the frame to each other in such a manner as to permit the temples to be rotated around the frame, while the frame and temples are being made of beta titanium, and that applies a sense of regulation to the temples at the time when the temples are rotated by means of the elastic plate and the contact member, thereby enhancing the easiness in the use of the eyeglasses made of the beta titanium having high frictional force and extending the life of the eyeglasses.

### [Description of Drawings]

FIG.1 is a perspective view showing a temple coupling structure for eyeglasses according to a first embodiment of the present invention.
FIG.2 is an exploded perspective view showing the temple coupling structure for eyeglasses of FIG.1.
FIG.3 is a plan sectional view of FIG.1.
FIG. 4 is a sectional view showing the rotated state of the temple in FIG.3.
FIG.5 is an exploded perspective view showing a temple coupling structure for eyeglasses according to a second embodiment of the present invention.
FIG. 6 is a sectional view showing the coupled state of the temple coupling structure of FIG.5.
FIG. 7 is a sectional view showing the folded state of the temple in FIG.6.
FIG.8 is a front view showing the temple coupling structure of FIG.6.

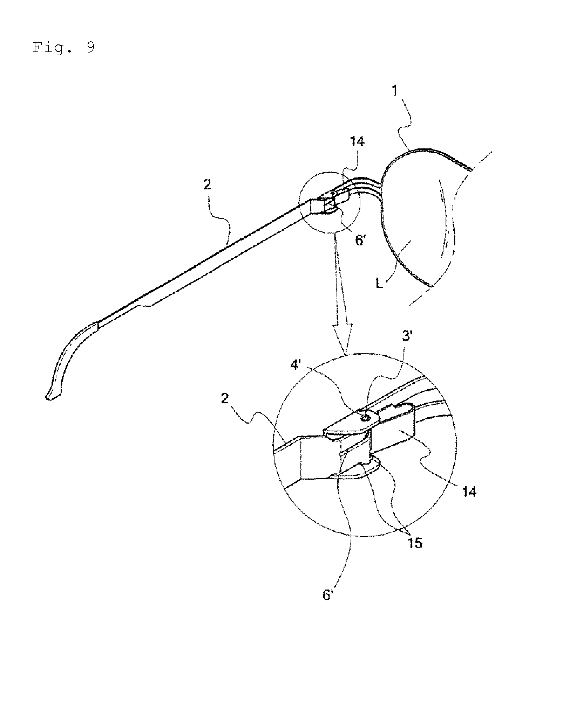

FIG.9 is a perspective view showing the coupled state of the temple coupling structure of FIG.5.
FIG.10 is an exploded perspective view showing the bent state of the locking face of FIG.5.

### [Mode for Invention]

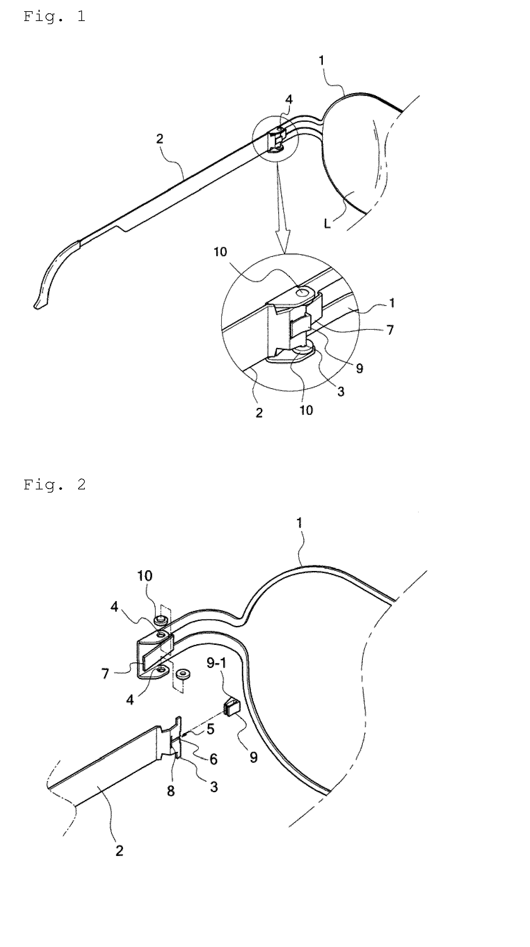

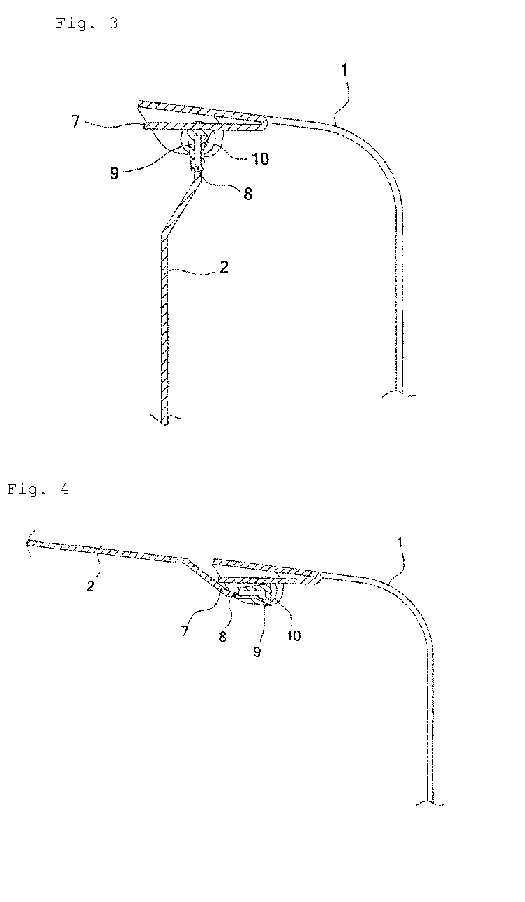

FIG. 1 is a perspective view showing a temple coupling structure for eyeglasses according to a first embodiment of the present invention, FIG.2 is an exploded perspective view showing the temple coupling structure for eyeglasses of FIG. 1, and FIG.3 is a plan sectional view of FIG. 1. A temple coupling structure for eyeglasses according to a first embodiment of the present invention includes a frame 1 made of a beta titanium plate and having lenses L fitted thereinto, temples 2 made of a beta titanium plate, and rotating means located between each temple 2 and the frame 1 in such a manner as to allow each temple 2 to be elastically rotated and foldable.

The rotating means includes locking protrusions 3 protruded upwardly and downwardly from one end of the temple 2, locking holes 4 formed on the upper and lower ends of the frame 1 in such a manner as to rotatably fit the locking protrusions 3 thereinto, and an elastic part 5 formed on the temple 2 to apply an elastic force with which the locking protrusions 3 are easily fitted into the locking holes 4, without any escape from the locking holes 4.

The elastic part 5 has an incised portion 6 formed horizontally from one end of the temple 2 where the locking protrusions 3 are formed, so that the locking protrusions 3 are moved upwardly and downwardly by the distance of the incised portion 6 formed thereon and easily fitted into the locking holes 4.

Further, lubrication means, which forms a sense of regulation during the rotation of the temple 2, with which the temple 2 can be elastically folded or unfolded with ease when folded or unfolded over a given angle, and performs a lubricating operation during the rotation of the temple 2, is provided between the temple 2 and the frame 1.

The lubrication means includes an elastic plate 7 formed by incising and folding the end portion of the frame 1, a contact member 9 having an end portion fitted into a coupling hole 8 formed on the end of the temple 2 and an angled outer portion 9-1 in such a manner as to come into contact with the elastic plate 7, and snap members 10 located between the locking protrusions 3 and the locking holes 4 and adapted to fit the locking protrusions 3 thereinto to prevent the friction occurring between the temple 2 and the frame 1 made of the beta titanium having substantially high frictional force, during the rotation of the temple 2.

The contact member 8 and the snap members 10 are made of a material having excellent hardness and lubricating operation such as nickel silver metals, Teflon and the like, so as to allow the frame 1 and the temple 2 made of the beta titanium having substantially high frictional force to be gently and elastically rotated.

Especially, the angled outer portion 9-1 of the contact member 9 has a given angle, so that the temple 2 is automatically folded or unfolded at the time when it is folded or unfolded over a given angle.

Next, an explanation on the operating effects of the temple coupling structure for eyeglasses according to the first embodiment of the present invention will be given. So as to perform the coupling process of the eyeglasses, first, the contact member 9 is coupled to the end of the temple 2, and in the state where the snap members 10 are fitted into the locking holes 4 of the frame 1, the locking protrusions 3 of the temple 2 are fitted into the locking holes 4 of the frame 1.

If the locking protrusions 3 of the temple 2 are fitted into the locking holes 4 of the frame 1, as shown in FIG.3, the contact member 9 is elastically supported by means of the elastic plate 7.

In this state, since the elastic plate 7 pushes the contact member 9 to apply the elasticity in a direction where the temple 2 is unfolded, the temple 2 is kept in the unfolded state.

If it is desired to fold the eyeglasses, as shown in FIG.4, the temple 2 is taken and rotated counterclockwisely, and through the rotating force of the temple 2, thus, the contact member 9 presses the elastic plate 7.

At the time when the contact member 9 presses the elastic plate 7, the elastic plate 7 pushes the contact member 9 through its own elastic force as it comes into close contact with the angled outer portion 9-1 of the contact member 9, thereby applying the elastic force with which the temple 2 is foldable.

That is, at the moment when the elastic plate 7 comes into close contact with the angled outer portion 9-1 of the contact member 9, it pushes the contact member 9, so that the temple 2 can be automatically folded by means of the elastic force thereof even though it is not folded by the wearer's hand,.

Of course, the contact member 9 is made of a material having an excellent lubricating operation such as nickel silver metals, Teflon and the like, and therefore, even if the contact member 9 comes into contact with the elastic plate 7 made of beta titanium having substantially high frictional force, it does not give any damage to the elastic plate 7, while allowing the temple 2 to be gently folded or unfolded.

In this case, the position and shape of the angled outer portion 9-1 formed on the contact member 9 are formed to provide a sense of regulation most desired by manufacturers or wearers to them.

As mentioned above, if the temple 2 has the sense of regulation when it is folded or unfolded by means of the contact member 9, it is more convenient to use the eyeglasses, and further, unexpected unfolding and bending occurrences of the temple 2 are prevented.

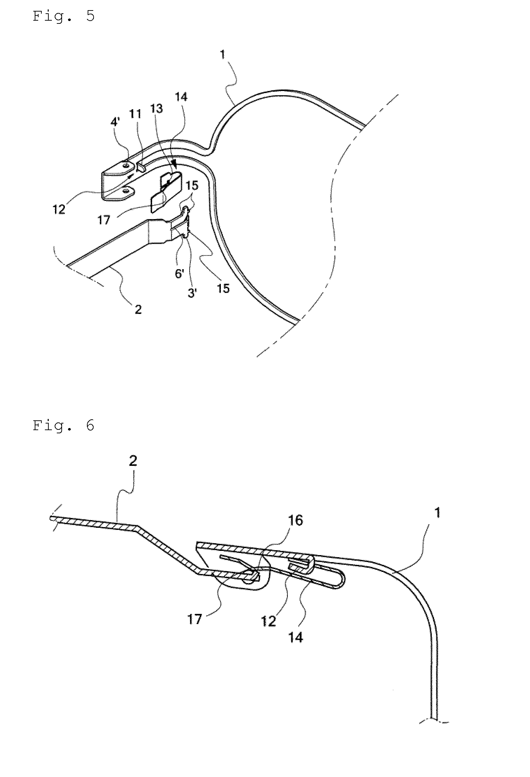

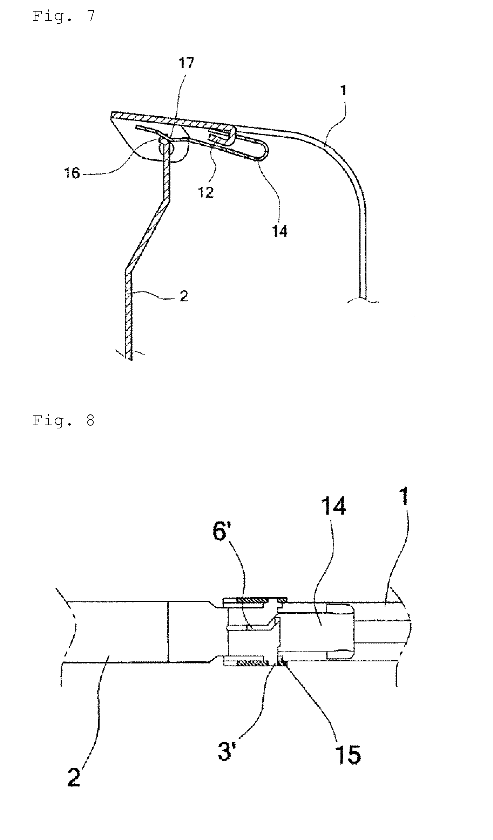

FIG.5 is an exploded perspective view showing a temple coupling structure for eyeglasses according to a second embodiment of the present invention, FIG. 6 is a sectional view showing the coupled state of the temple coupling structure of FIG.5, FIG. 7 is a sectional view showing the folded state of the temple in FIG.6, and FIG. 8 is a front view showing the temple coupling structure of FIG.6. A temple coupling structure for eyeglasses according to a second embodiment of the present invention includes rotating means having a coupling portion 12 formed by incising and bending a frame 1 and having a locking face 11 formed on the end thereof, an elastic piece 14 having a bent form and a coupling slot 13 adapted to fit the coupling portion 12 thereinto, locking protrusions 3' formed on the upper and lower ends of the end of a temple 2 in such a manner as to be rotatably fitted into locking holes 4' formed on the frame 1, an incised portion 6' formed horizontally on the end of the temple 2 in such a manner as to allow the locking protrusions 3' to be easily fitted into the locking holes 4', and guides 15 formed on both sides of each locking protrusion 3' in such a manner as to reduce the contact area of the temple 2 with the locking protrusions 3' fitted into the locking holes 4' during the rotation of the temple 2 and to decrease the frictional force therebetween.

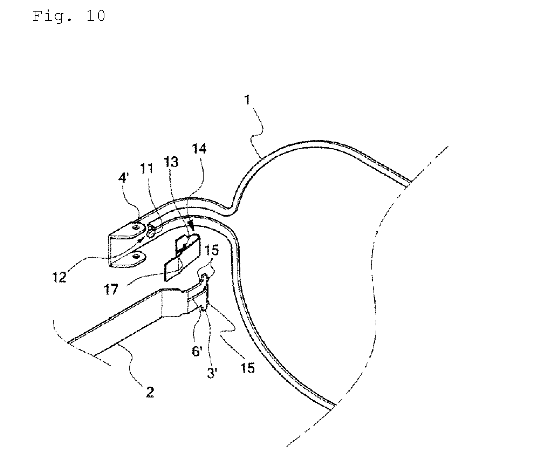

On the other hand, as shown in FIG.10, in the state where the coupling portion 12 is fitted into the coupling slot 13, the locking face 11 formed on the coupling portion 12 is bent to lock the elastic piece 14 thereinto.

Especially, the elastic piece 14 is separately provided to have high elasticity and is thus coupled to the coupling portion 12. In this case, the frame 1 has a relatively small width, and thus, if the frame 1 is cut to just form an elastic portion thereon, the elasticity is low and the contact face with the temple 2 is relatively small, so that the elastic portion is twisted to fail to provide the elastic action. Accordingly, the elastic piece 14 is separately provided to have a large width similar to the width of the temple 2, thereby applying high elasticity therefrom and being stably operated during the rotation of the temple 2.

So as to apply the sense of regulation when the temple 2 is folded or unfolded, a contact protrusion 16 is formed on the end of the temple 2, and a bent portion 17 is formed on the elastic piece 14, on which the contact protrusion 16 slides to form the sense of regulation.

The position and shape of the incised portion 6' are desirably formed on the upper side of the end portion of the temple 2 in such a manner as to be connected to the contact protrusion 16, thereby allowing the contact protrusion 16 to come into contact with the elastic piece 14 over substantially large area. Since the contact area becomes large at the time when the contact protrusion 16 comes into contact with the elastic piece 14, the elastic motion can be more stably performed.

That is, if the temple 2 is folded or unfolded over a given angle, the contact protrusion 16 slides on the bent portion 17, so that the temple 2 is automatically folded or unfolded by means of the elasticity action.

As described above, the temple coupling structure for eyeglasses according to the preferred embodiments of the present invention does not use hinges and hinge pins fixedly welded to the temple and frame in the conventional practices, but uses the temple made of the beta titanium plate having high frictional force in such a manner as to be foldable, so that even though the temple is repeatedly folded or unfolded, abrasion on the temple or frame is not easily generated, and the temple is automatically folded or unfolded at a given angle, thereby performing gentle folding or unfolding operations.

Additionally, the temple is made of beta titanium, but even if it is made of stainless steel (SUS), the configuration and operating effects thereof are the same as those of the temple made of beta titanium.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A temple coupling structure for eyeglasses, comprising:
a frame made of a beta titanium plate and having lenses fitted thereinto;
temples made of a beta titanium plate; and
a rotating means located between each temple and the frame in such a manner as to allow each temple to be elastically rotated and foldable.

2. The temple coupling structure for eyeglasses according to claim 1, wherein the rotating means comprises: locking protrusions protruded upwardly and downwardly from one end of the temple; locking holes formed on the upper and lower ends of the frame in such a manner as to rotatably fit the locking protrusions thereinto; and an elastic part formed on the temple to apply an elastic force with which the locking protrusions are easily fitted into the locking holes, without any escape from the locking holes.

3. The temple coupling structure for eyeglasses according to claim 2, wherein the elastic part comprises an incised portion formed horizontally from one end of the temple where the locking protrusions are formed, so that the locking protrusions are moved upwardly and downwardly thereby.

4. The temple coupling structure for eyeglasses according to any one of claims 1 to 3, wherein between the temple and the frame, a lubrication means is provided to apply a sense of regulation to the temple at the time when the temple is rotated and to perform a lubricating operation at the time when the temple is rotated.

5. The temple coupling structure for eyeglasses according to claim 4, wherein the lubrication means comprises: an elastic plate formed by incising and folding the end portion of the frame; a contact member having an end portion fitted into a coupling hole formed on the end of the temple and an angled outer portion in such a manner as to come into contact with the elastic plate; and snap members located between the locking protrusions and the locking holes and adapted to fit the locking protrusions thereinto to prevent the friction occurring between the temple and the frame made of the beta titanium during the rotation of the temple.

6. The temple coupling structure for eyeglasses according to claim 1, wherein the rotating means comprises: a coupling portion formed by incising and bending the frame; an elastic piece having a bent form and a coupling slot adapted to fit the coupling portion thereinto; and locking protrusions formed on the upper and lower ends of the end of the temple in such a manner as to be rotatably fitted into locking holes formed on the frame.

7. The temple coupling structure for eyeglasses according to claim 6, wherein in the state where the coupling portion is fitted into the coupling slot, a locking face is formed on the end of the coupling portion in such a manner as to lock the elastic piece thereinto.

8. The temple coupling structure for eyeglasses according to claim 6, wherein the rotating means further comprises an incised portion formed horizontally on the end of the temple in such a manner as to allow the locking protrusions to be easily fitted into the locking holes.

9. The temple coupling structure for eyeglasses according to claim 6, wherein the rotating means further comprises guides formed on both sides of each locking protrusion in such a manner as to reduce the contact area of the temple with the locking protrusions fitted into the locking holes and to decrease the frictional force therebetween.

10. The temple coupling structure for eyeglasses according to any one of claims 6 to 9, wherein the rotating means further comprises: a contact protrusion formed on the end of the temple to apply the sense of regulation when the temple is folded or unfolded; and a bent portion formed on the elastic piece, on which the contact protrusion slides to form the sense of regulation when the temple is folded or unfolded.

11. The temple coupling structure for eyeglasses according to claim 8, wherein the incised portion is formed at a position capable of allowing the contacted area between the contact protrusion and the elastic piece to become large.

12. A temple coupling structure for eyeglasses, comprising:
a frame having lenses fitted thereinto;
temples; and
a rotating means located between each temple and the frame in such a manner as to allow each temple to be elastically rotated and folded, the rotating means comprising locking protrusions protruded upwardly and downwardly from one end of the temple, locking holes formed on the upper and lower ends of the frame in such a manner as to rotatably fit the locking protrusions thereinto, and an elastic part formed on the temple to apply an elastic force with which the locking protrusions are easily fitted into the locking holes, without any escape from the locking holes.
